# EUROPÄISCHE PATENTSCHRIFT

(11) **EP 1 471 600 B1**
(45) Veröffentlichungstag und Bekanntmachung des Hinweises auf die Patenterteilung: **10.12.2008**
(21) Anmeldenummer: 04008173.9
(22) Anmeldetag: 03.04.2004
(51) Int. Cl.: H01Q 3/24, H01Q 25/00, G01S 13/90

(54) **Verfahren zur Erzeugung von mehreren SAR-Sendestrahlen und SAR-Antennensystem**
Method of generating multiple SAR transmit beams and a SAR antenna system
Procéde de génération de multi-faisceaux de transmission de système SAR et système d'antenna de SAR

(30) Priorität: 25.04.2003 DE 10319063
(43) Veröffentlichungstag der Anmeldung: 27.10.2004
(73) Patentinhaber: Astrium GmbH, 81663 München (DE)
(72) Erfinder: Heer, Christoph, 88048 Friedrichshafen (DE); Grafmüller, Bernhard, 88677 Markdorf (DE)
(74) Vertreter: Ulrich, Thomas

(56) Entgegenhaltungen:
- EP-A- 1 065 518
- WO-A-01/95427
- DE-A- 2 729 110
- US-A- 3 965 475
- US-A- 5 926 125
- US-B1- 6 175 326
- US-B1- 6 504 517
- PATENT ABSTRACTS OF JAPAN Bd. 0150, Nr. 59 (P-1165), 13. Februar 1991 (1991-02-13) & JP 2 287181 A (MATSUSHITA ELECTRIC WORKS LTD), 27. November 1990 (1990-11-27)

## Beschreibung

Die Erfindung betrifft Verfahren zur Erzeugung von Sendestrahlen mit einem SAR-Antennens stem und ein SAR-Antennensystem mit einer Mehrzahl von Antennenelementen zur Erzeugung von Sendestrahlen.

SAR-Antennensysteme können dazu verwendet werden, Oberflächenbereiche abzutasten, beispielsweise Oberflächenbereiche der Erde mit Hilfe von luft- oder weltraumgestützten SAR-Antennensystemen. Die Sendestrahlen können dabei in der Regel mit unterschiedlicher Senderichtung abgestrahlt werden. Zur Verbesserung der Abbildungseigenschaften (Streifenbreite und Bildqualität) eines SAR-Antennensystems kann es je nach Größe und Lage der abzutastenden Oberflächenbereiche notwendig werden, die Strahlbreite der Sendestrahlen an die aktuellen Senderichtung der Sendestrahlen anzupassen. Bei der Fernerkundung der Erdoberfläche mit SAR wird die aktuelle Senderichtung durch den Einfallswinkel der Radarstrahlen auf die Erdoberfläche definiert. Bei großen Einfallswinkeln (z. B. 50°) beleuchtet ein Sendestrahl mit einer definierten Breite ein bestimmtes Gebiet der Erdoberfläche. Bei einer Ausrichtung des Sendestrahls zu kleinen Einfallswinkeln (z. B. 20°) beleuchtet derselbe Sendesstrahl ein wesentlich kleineres Gebiet. Durch eine Strahlaufweitung kann dieses in der Regel unerwünschte Verhalten verbessert werden.

Die Druckschrift US 6,175,326 B1 beschreibt ein SAR-Antennensystem, bei dem eine Steuerung der Empfangsstrahl-Charakteristik mit einer Mehrzahl von Antennenelementen dadurch erfolgen kann, dass entweder Phasenunterschiede oder Laufzeitunterschiede zwischen den einzelnen Antennenelementen vorgesehen werden oder nacheinander benachbarte Antennenelemente für den Empfang freigeschaltet werden. Über die Erzeugung von Sendestrahlen wird jedoch in dieser Druckschrift nichts ausgesagt.

Aus dem Stand der Technik sind weiterhin einerseits Systeme mit aktiver oder semi-aktiver Antenne bekannt, um eine variable Strahlbreite und gegebenenfalls auch eine eine varibale Strahlausrichtung zu erzielen. Bei solchen Systemen mit aktiver oder semi-aktiver Antenne werden mit Hilfe von Amplituden- und/oder Phasenstellern einzelnen Antennenelementen oder Gruppen von Elementen Radarsignale mit unterschiedlicher und variabler Gewichtung zugeführt. Solche SAR-Systeme mit planaren Antennen aus dem Satellitenbereich sind z. B. das zukünftige TerraSAR-X, das beispielsweise beschrieben ist in M. Sues et al. " TERRASAR-X - DESIGN AND PERFORMANCE", Proceedings EUSAR 2002', 4th European Conference on Synthetic Aperture Radar, Köln, 4-6. Juni 2002, VDE Verlag GmbH, Berlin und Offenbach, ISBN 3-8007-2697-1. Ein wesentlicher Nachteil dieser Systeme ist der hohe konstruktive Aufwand und die damit verbundenen hoher Kosten. Alternative Konzepte basieren auf Reflektorantennen deren Speisesystem durch hochfrequente Netzwerkmatrizen realisiert sind (z. B. Butler oder Blass Matrix). Ein wesentlicher Nachteil dieser Systeme sind die hohen Verluste innerhalb der Netzwerkmatrizen sowie deren Realisierung für hohe Sendeleistung.

Aus dem Stand der Technik sind andererseits auch Systeme mit passiver Antenne bekannt. Typische SAR-Systeme mit passiven, planaren Antennen aus dem Satellitenbereich sind ERS-1 & ERS-2. Diese Systeme sind durch eine fest eingestellte Gewichtung der Antennenelemente gekennzeichnet. Bei solchen Systemen können die Antennenelemente des SAR-Antennensystems nur insgesamt eingeschaltet oder ausgeschaltet werden, so dass nur ein einziger Sendestrahl mit festgelegter Strahlcharakteristik und Strahlbreite erzeugt werden kann.

Aufgabe der vorliegenden Erfindung ist es daher, eine einfache Möglichkeit zur Erzeugung von Sendestrahlen mit unterschiedlicher Strahlbreite mit Hilfe von SAR-Antennensystemen bereitzustellen,

Diese Aufgabe wird gelöst durch die Merkmale der Patentansprüche 1 und 4.

Ein erster Gegenstand der vorliegenden Erfindung umfasst ein Verfahren zur Erzeugung von Sendestrahlen mit einem SAR-Antennensystem, welches eine Mehrzahl von Antennenelementen aufweist. Gemäß der Erfindung ist vorgesehen, dass innerhalb der Mehrzahl von Antennenelementen mehrere Gruppen mit jeweils mehreren benachbarten Antennenelementen definiert werden und dass eine Erzeugung mehrerer definierter Sendestrahlen jeweils durch Aktivierung einer einem Sendestrahl zugeordneten Gruppe von Antennenelementen erfolgt. Es können dabei einzelne Antennenelemente genau einer oder auch gleichzeitig mehreren Gruppen angehören. Durch die Erfindung wird auf einfache Weise ermöglicht, mit einem SAR-Antennensystem mehrere Sendestrahlen zu erzeugen, ohne dass dabei der hohe Aufwand zur Erzeugung von Phasenunterschieden oder Laufzeitunterschieden erforderlich ist.

Es wird vorgesehen, dass Gruppen mit unterschiedlicher Anzahl von Antennenelementen definiert werden und Sendestrahlen mit unterschiedlicher Ausdehnung durch Aktivierung der Gruppen mit unterschiedlicher Anzahl von Antennenelementen erzeugt werden. Es kann also auf einfache Weise über die Anzahl der zu aktivierenden Antennenelemente die Ausdehnung der Sendestrahlen, insbesondere die Strahlbreite, beeinflusst werden. Je mehr Antennenelemente einer bestimmten Gruppe zugeordnet werden, umso größer wird die Ausdehnung des entsprechenden Sendestrahls allein durch die Anzahl der beteiligten Antennenelemente.

Um sicherzustellen, dass durch mehrere Sendestrahlen ein bestimmter Oberflächenbereich lückenlos abgetastet wird, überlappen sich die einzelnen Sendestrahlen in einem gewissen Bereich. Dies kann im Rahmen der Erfindung dadurch erzielt werden, dass einander benachbarte Gruppen von Antennenelementen derart definiert werden, dass sie zumindest ein gemeinsames Antennenelement aufweisen und benachbarte, einander überlappende Sendestrahlen durch derart definierte, benachbarte Gruppen von Antennenelementen erzeugt werden. Diese Maßnahme ist wiederum sehr einfach zu realisieren, aber sie bietet dennoch die Sicherheit, dass die von den Gruppen erzeugten Sendestrahlen in jedem Fall überlappen.

Eine Abtastung einer Oberflächenregion durch benachbarte Sendestrahlen erfolgt derart, dass nacheinander mehrere benachbarte Gruppen von Antennenelementen aktiviert werden. Es erfolgt dabei ein Scannen der Oberflächenregion in derjenigen Richtung, in der die benachbarten Gruppen nebeneinander angeordnet sind (Scan-Modus).

Zusätzlich kann aber auch vorgesehen sein, dass eine Abtastung einer Oberflächenregion durch mindestens einen Sendestrahl erfolgt, indem die Sendestrahlrichtung in Richtung auf den Beginn der Oberflächenregion ausgerichtet wird und die Gruppe zur Erzeugung des Sendestrahls so lange aktiviert bleibt, bis der Sendestrahl die gesamte Oberflächenregion überstrichen hat. Der entsprechende Sendestrahl überstreicht dabei während der Dauer der Aktivierung der Gruppe einen Streifen auf der Oberfläche, d, h. die entsprechende Oberflächenregion ist dann streifenförmig (Streifen-Modus).

Eine zweite Alternative, die auch gleichzeitig zum Scannen durchgeführt werden kann, sieht vor, dass eine Ausleuchtung eines Oberflächenpunktes durch mindestens einen Sendestrahl erfolgt, indem die Sendestrahlrichtung in Richtung auf den Oberflächenpunkt ausgerichtet wird und die Sendestrahlrichtung während der Dauer der Aktivierung der Gruppe, welche den Sendestrahl erzeugt, fortlaufend auf den Oberflächenpunkt nachgeregelt wird (Spotlight-Modus).

Die Ausrichtung bzw. Nachregelung der Sendestrahlrichtung kann im Rahmen der Erfindung entweder durch eine entsprechende Ausrichtung oder Nachregelung der SAR-Antennenanordnung erfolgen, beispielsweise durch eine entsprechende Ausrichtung der gesamten Anordnung der Antennenelemente oder eines Antennenreflektors, oder auch durch eine Ausrichtung bzw. Nachregelung des gesamten Trägerkörpers für die SAR-Antennenanordnung, im Fall einer satellitengestützten SAR-Antennenanordnung also durch Ausrichtung bzw. Nachregelung des gesamten Satelliten,

Ein weiterer Gegenstand der vorliegenden Erfindung ist ein SAR-Antennensystem mit einer Mehrzahl von Antennenelementen zur Erzeugung von Sendestrahlen. Gemäß der Erfindung ist vorgesehen, dass innerhalb der Mehrzahl von Antennenelementen schaltungstechnisch mehrere Gruppen mit jeweils mehreren benachbarten Antennenelementen definiert werden können wobei mit Hilfe von Schaltungseinrichtungen jeweils eine separate eine Aktivierung einer Gruppe von Antennenelementen möglich ist. Es können dabei einzelne Antennenelemente genau einer oder auch gleichzeitig mehreren Gruppen angehören. Durch die Erfindung wird auf einfache Weise ermöglicht, mit einem SAR-Antennensystem mehrere Sendestrahlen zu erzeugen, ohne dass dabei der hohe Aufwand zur Erzeugung von Phasenunterschieden oder Laufzeitunterschieden erforderlich ist.

Die Erzeugung von Sendestrahlen mit unterschiedlicher Ausdehnung wird im Rahmen der Erfindung dadurch realisiert, dass schaltungstechnisch Gruppen mit unterschiedlicher Anzahl von Antennenelementen definiert werden können. Je mehr Antennenelemente einer bestimmten Gruppe zugeordnet werden, umso größer wird die Ausdehnung des entsprechenden Sendestrahls allein durch die Anzahl der beteiligten Antennenelemente.

Soll sichergestellt werden, dass durch mehrere Sendestrahlen ein bestimmter Oberflächenbereich lückenlos abgetastet wird, dann ist es sinnvoll, dass sich die einzelnen Sendestrahlen in einem gewissen Bereich überlappen. Dies kann im Rahmen der Erfindung dadurch erzielt werden, dass schaltungstechnisch einander benachbarte Gruppen von Antennenelementen derart definiert werden, dass sie zumindest ein gemeinsames Antennenelement aufweisen.

Bevorzugt kann das SAR-Antennensystem einen Reflektor aufweisen. Dann können die Antennenelemente in einer Reihe in der Fokalebene des Reflektors angeordnet sein. Die Antennenelemente können zentral vor dem Reflektor oder auch in einer Offset-Konfiguration angeordnet sein.

Sollen mit dem SAR-Antennensystem sowohl SAR-Signale ausgesendet als auch empfangen werden, so kann entweder ein gemeinsames Hochfrequenznetzwerk für die Sendesignale und die Empfangssignale vorgesehen werden oder es können getrennte Hochfrequenznetzwerk für die Sendesignale und die Empfangssignale vorgesehen werden.

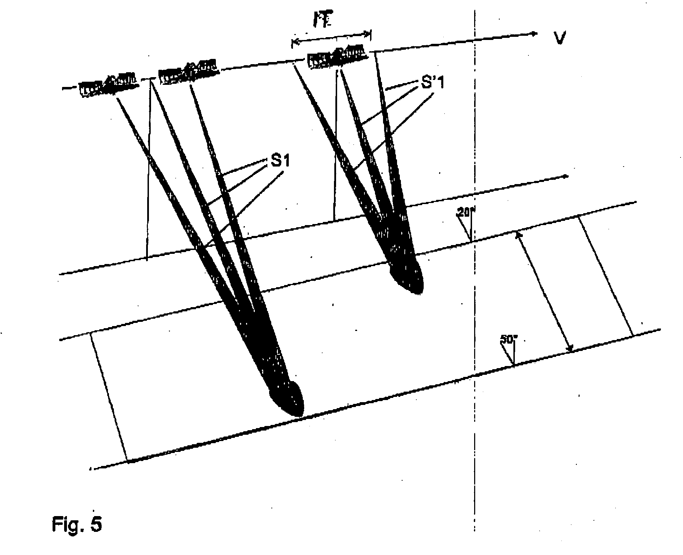

Ein spezielles Ausführungsbeispiel der vorliegenden Erfindung wird nachfolgend anhand der Figuren 1 bis 5 am Beispiel eines SAR-Antennensystems für Satellitenanwendungen erläutert.

Es zeigen:
- Fig. 1: SAR-Antennensystem mit Mehrzahl von Antennenelementen und Reflektor
- Fig. 2: Schematische Darstellung überlappender Sendestrahlen
- Fig. 3: Schematische Darstellung einer Oberflächenabtastung im Scan-Modus
- Fig. 4: Schematische Darstellung einer Oberflächenabtastung im Streifen-Modus
- Fig. 5: Schematische Darstellung einer Oberflächenabtastung im Spotlight-Modus

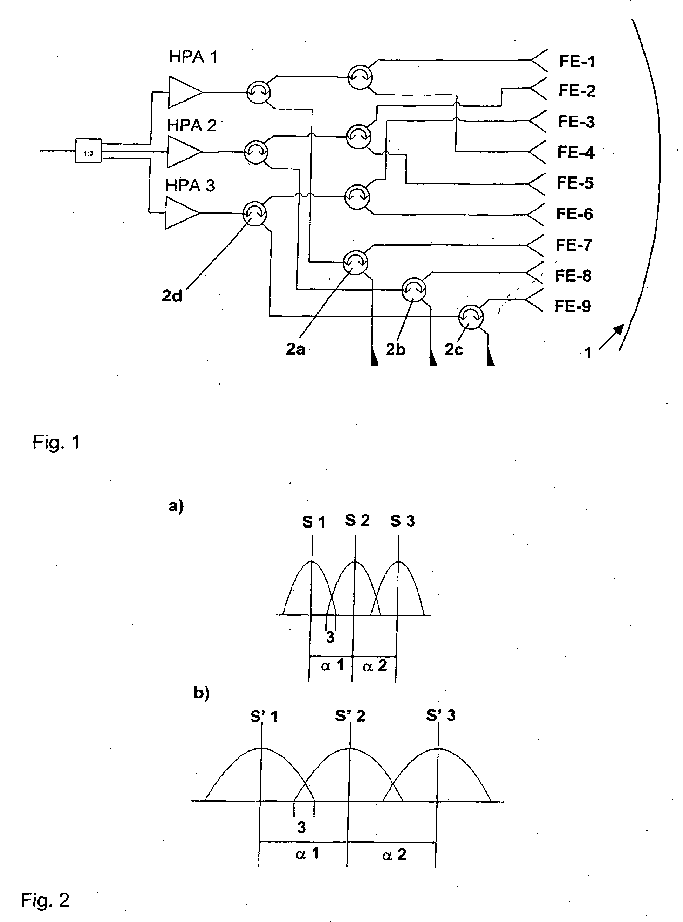

Das SAR-Antennensystem gemäß Fig. 1 ist als passives Reflektorantennensystem mit einem Reflektor 1 und nebeneinander in einer Reihe angeordneten Antennenelementen FE-1 bis FE-9 ausgelegt. Weiterhin sind eine Reihe von Schaltungseinrichtungen 2a, 2b, 2c, 2d etc. vorgesehen, hier in Realisiert durch schaltbare Zirkulatoren, um jeweils mehrere der Antennenelemente (Feedelemente) FE-1 bis FE-9 zu Gruppen zusammen zu schalten.

In dieser Ausführungsform werden zwei Cluster von Gruppen gebildet, mit jeweils vier Antennenstrahlen als Sendestrahlen pro Cluster. Das erste Cluster von Gruppen erzeugt Antennenstrahlen mit großen Strahlbreiten und wird vorzugsweise für kleine Einfallswinkel (beispielsweise kleiner oder gleich 25 °) auf der abzutastenden Erdoberfläche benutzt. Das zweite Cluster erzeugt schmalere Antennenstrahlen und wird für große Einfallswinkel (beispielsweise größer oder gleich 45 °) auf der abzutastenden Erdoberfläche genutzt.

Die Antennenelemente FE-1 bis FE-9 werden über Hochleistungsverstärker (High Power Amplifier) HPA1 bis HPA3 und ein nachgeschaltetes Hochfrequenznetzwerk gespeist. Das Hochfrequenznetzwerk besteht aus Hohlleitern und schaltbaren Zirkulatoren 2a, 2b, 2c, 2d etc. und stellt somit eine sehr verlustarme Anordnung dar.

Die Verschalung der Zirkulatoren 2a, 2b, 2c, 2d etc. ist so gewählt, das für einen ersten Antennenstrahl mit größerer Strahlbreite des ersten Clusters die Antennenelemente FE-1, FE-2 und FE-3 aktiviert sind. Damit bilden also die Antennenelemente FE-1, FE-2 und FE-3 eine erste Gruppe des ersten Clusters. Die Aktivierung der zweiten Gruppe, bestehend aus den Antennenelementen FE-3, FE-4 und FE-5, ergibt einen zweiten, dem ersten Antennenstrahl benachbarten Antennenstrahl des ersten Clusters, ebenfalls mit größerer Strahlbreite, usw. Durch die räumliche Anordnung und der Auswahl der aktiven Antennenelemente werden nach diesem Verfahren sequentiell vier breite und sich überlappenden Antennenstrahlen erzeugt, die bevorzugt bei kleinen Einfallswinkeln benutzt werden. Die größere Breite der Antennenstrahlen gleicht dabei die geometrischen Effekte auf der Oberfläche der Erde bei kleinen Einfallswinkeln aus. Das Überlappen der Antennenstrahlen ergibt sich auf einfache Weise dadurch, dass der ersten und zweiten Gruppe jeweils das gemeinsame Antennenelement FE-3 angehört.

Für große Einfallswinkel wird zur Erzeugung eines ersten Antennenstrahls mit geringerer Strahlbreite eine erste Gruppe von Antennenelementen des zweiten Clusters aktiviert, wobei diese erste Gruppe die Antennenelemente FE-3 und FE-4 umfasst. Ein zweiter Antennenstrahl des zweiten Clusters wird durch Aktivierung einer zweiten Gruppe von Antennenelementen erzeugt, wobei diese zweite Gruppe die Elemente FE-4 und FE-5 umfasst. Das Überlappen der Antennenstrahlen ergibt sich auf einfache Weise dadurch, dass der ersten und zweiten Gruppe des zweiten Clusters jeweils das gemeinsame Antennenelement FE-4 angehört. Somit ergeben sich vier schmale, überlappenden Antennenstrahlen die bevorzugt bei großem Einfallswinkel benutzt werden.

Die Konfigurationen für alle Gruppen des ersten und zweiten Clusters von Antennenelementen wird im Überblick in der nachfolgenden Tabelle dargestellt. Man erkennt, dass das erste und zweite Cluster aus denselben neun Antennenelementen FE-1 bis FE-9 gebildet wird und sich die Zugehörigkeit zu einem bestimmten Cluster nur temporär über die jeweilige aktuelle Ansteuerung der schaltbaren Zirkulatoren 2a, 2b, 2c, 2d etc. ergibt.

| Konfiguration für breiten Antennenstrahl im Cluster eins | | | | |
|---|---|---|---|---|
| Aktive Antennenelemente | 1, 2 & 3 | 3, 4 & 5 | 5, 6 & 7 | 7, 8 & 9 |
| Aktive HPAs | 1, 2 & 3 | 3, 1 & 2 | 2, 3 & 1 | 1, 2 & 3 |

| Konfiguration für schmale Antennenstrahl im Cluster zwei | | | | |
|---|---|---|---|---|
| Aktive Antennenelemente | 3 & 4 | 4 & 5 | 5 & 6 | 6 & 7 |
| Aktive HPAs | 1 & 2 | 2 & 3 | 3 & 1 | 1 & 2 |

Fig. 2 zeigt beispielhaft jeweils drei überlappende Sendestrahlen, wie sie durch die Anordnung nach Fig. 1 als Antennenstrahlen erzeugt werden können. Alpha1 und Alpha2 stellen dabei die relative Strahlausrichtung der einzelnen Sendestrahlen untereinander dar. Dabei zeigt Fig. 2a) Antennenstrahlen S1, S2, S3 mit geringerer Strahlbreite, wie sie durch das zweite Cluster von Antennenelementen erzeugt werden können. Dagegen zeigt Fig. 2b) Antennenstrahlen S'1, S'2, S'3 mit größerer Strahlbreite, wie sie durch das erste Cluster von Antennenelementen erzeugt werden können.

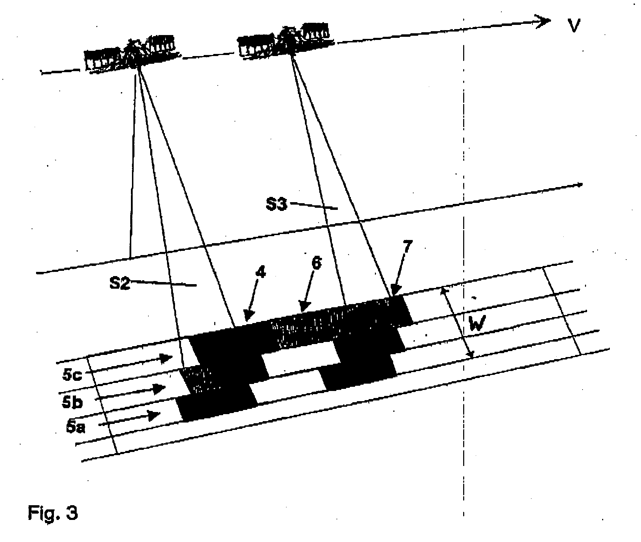

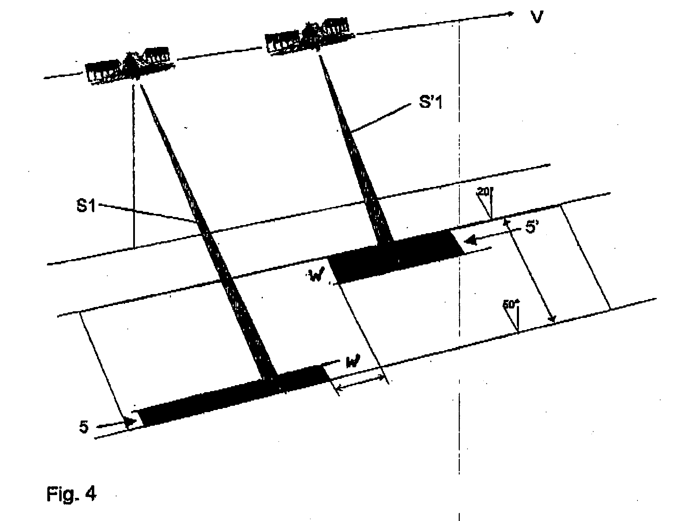

Mit solchen überlappenden Antennenstrahlen kann insbesondere vorteilhaft eine Abtastung der Erdoberfläche im Scan-Modus erfolgen, wie in Fig. 3 dargestellt. Hier sollen aus Gründen der Einfachheit nur drei Sendestrahlen S1, S2, S3 betrachtet werden:
Benachbarte Antennenstrahlen S1, S2, S3 überstreichen auf der Erdoberfläche in Flugrichtung V des Satelliten jeweils benachbarte Gebiete 5a, 5b, 5c. Zur Abtastung wird der Antennenstrahl scheinbar sequentiell in Elevationsrichtung (d. h. quer zur Flugrichtung V) in einem Burst-Verfahren geschwenkt. Tatsächlich werden aber in einem ersten Scanvorgang 4 nacheinander die benachbarten Sendestrahlen S1, S2, S3 aktiviert, wodurch in den Gebieten 5a, 5b, 5c jeweils ein erster Streifen abgetastet wird. Anschließend wird ein zweiter Scanvorgang 6, ein dritter Scanvorgang 7 usw. durchgeführt. Ein Scan pro Antennenstrahl S1, S2, S3 wird als Burst bezeichnet. Für die Dauer eines Bursts im ersten Scanvorgang 4 verbleibt also der Antennenstrahl S1 in seiner aktuellen Richtung und das SAR arbeitet im Gebiet 5a wie im Streifenmode (siehe unten Fig. 4). Zu Beginn des nächsten Bursts wird der Antennenstrahl S1 deaktiviert und der Antennenstrahl S2 aktiviert, der in das benachbarte Gebiet 5b gerichtet ist. Anschließend erfolgt analog die Aktivierung des Sendestrahls S3 für das Gebiet 5c.

Durch die sukzessive Abtastung benachbarter Streifen 5a, 5b, 5c vergrößert kann somit ein breiterer Oberflächenstreifen abgetastet werden als mit nur einem Antennenstrahl. Um einen kontinuierliche Streifen in Flugrichtung zu erreichen, wird die gesamte SAR-Integrationszeit auf die einzelnen Sub-Streifen 5a, 5b, 5c aufgeteilt (Burst). Typische SAR Integrationszeiten liegen im Bereich einiger hundert Millisekunden. Demnach erfolgt für den Scan-Modus-Betrieb eine schnelle Umschaltung zwischen den Antennenstrahlen S1, S2, S3. Um Lücken zwischen den einzelnen Sub-Streifen 5a, 5b, 5c zu vermeiden (also quer zur Flugrichtung V), wird für die einzelnen Antennenstrahlen S1, S2, S3 ein Überlapp entsprechend Fig. 2 erzeugt.

Je nachdem, ob nun eine Scan-Modus-Abtastung für kleinere oder größere Einfallswinkel erfolgen soll, werden entweder die entsprechenden Gruppen des ersten Clusters oder des zweiten Clusters von Antennenelementen aktiviert, um entweder Antennenstrahlen mit größerer oder geringerer Strahlbreite W zu erzeugen.

Fig. 4 veranschaulicht nochmals deutlicher den Betrieb einer Antennenanordnung im Streifen-Modus:
Im Streifen-Modus ist jeweils ein bestimmter Antennenstrahl S1, S'1 zu einem bestimmten Einfallswinkel ausgerichtet. Das SAR-Antennensystem sendet mit einer Pulswiederholfrequenz Radarsignale zur Erdoberfläche und empfängt dessen Echos. Somit wird die Erde von einem bestimmten Antennenstrahl S1, S'1 in einem kontinuierlichen Streifen 5, 5' abgetastet. Bei SAR-Systemen mit passiver Antenne erfolgt die Ausrichtung des Antennenstrahls S1, S'1 per Satellitenmanöver (d. h. Ausrichtung des gesamten Satelliten) oder durch mechanisch Bewegung der Antenne. Die erreichbare Streifenbreite 5, 5' ist im wesentlichem durch die Strahlbreite des Antennenstrahls S1, S'1 bestimmt. Die geometrische Auflösung ist durch die SAR-Integrationszeit vorgegeben, also durch die Zeitdauer, während der ein Antennenstrahl S1, S'1 aktiviert bleibt. Gemäß der Erfindung können dabei die Breiten W der Streifen 5, 5' für große und kleine Einfallswinkel einander dadurch angepasst werden, dass für große Einfallswinkel ein Antennenstrahl S1 mit kleiner Strahlbreite und für kleine Einfallswinkel ein Antennenstrahl S'1 mit großer Strahlbreite aktiviert wird.

Eine Erhöhung der geometrischen Auflösung kann durch eine Erhöhung der SAR-Integrationszeit (Integration Time) IT erreicht werden. Dabei wird ein Antennenstrahl S1, S'1 in der Azimutebene (d. h. derjenigen Ebene die durch die Flugrichtung V und Strahlrichtung des Sendestrahls S1, S'1 aufgespannt wird) derart nachgeregelt, dass der Antennenstrahl S1, S'1 überwiegend auf einen Oberflächenpunkt ausgerichtet bleibt. Im Rahmen dieses Beispiels für passive Antennensysteme erfolgt diese Nachregelung durch ein Satellitenmanöver (Nachregelung des gesamten Satelliten). Eine kontinuierliche Abtastung der Erdoberfläche (kontinuierlicher Streifen) ist im Spotlight Mode folglich nicht möglich.

## Patentansprüche

1. Verfahren zur Erzeugung von Sendestrahlen mit einem SAR-Antennensystem, welches eine Mehrzahl von Antennenelementen aufweist,
wobei innerhalb der Mehrzahl von Antennenelementen mehrere Gruppen mit jeweils mehreren benachbarten Antennenelementen definiert werden,
**dadurch gekennzeichnet,**
- **dass** eine Erzeugung mehrerer definierter Sendestrahlen jeweils durch Aktivierung einer einem Sendestrahl zugeordnete Gruppe von Antennenelementen erfolgt,
- **dass** eine Abtastung einer Oberflächenregion durch benachbarte Sendestrahlen erfolgt, indem nacheinander mehrere benachbarte Gruppen von Antennenelementen aktiviert werden,
- **dass** einander benachbarte Gruppen von Antennenelementen derart definiert werden, dass sie zumindest ein gemeinsames Antennenelement aufweisen und benachbarte, einander überlappende Sendestrahlen durch derart definierte, benachbarte Gruppen von Antennenelementen erzeugt werden und
- **dass** Gruppen mit unterschiedlicher Anzahl von Antennenelementen definiert werden und Sendestrahlen mit unterschiedlicher Ausdehnung durch Aktivierung der Gruppen mit unterschiedlicher Anzahl von Antennenelementen erzeugt werden.

2. Verfahren nach Anspruch 1,
**dadurch gekennzeichnet,**
**dass** eine Abtastung einer Oberflächenregion durch mindestens einen Sendestrahl erfolgt, indem die Sendestrahlrichtung in Richtung auf den Beginn der Oberflächenregion ausgerichtet wird und die Gruppe zur Erzeugung des Sendestrahls so lange aktiviert bleibt, bis der Sendestrahl die gesamte Oberflächenregion überstrichen hat.

3. Verfahren nach Anspruch 1,
**dadurch gekennzeichnet,**
**dass** eine Ausleuchtung eines Oberflächenpunktes durch mindestens einen Sendestrahl erfolgt, indem die Sendestrahlrichtung in Richtung auf den Oberflächenpunkt ausgerichtet wird und die Sendestrahlrichtung während der Dauer der Aktivierung der Gruppe, welche den Sendestrahl erzeugt, fortlaufend auf den Oberflächenpunkt nachgeregelt wird.

4. SAR-Antennensystem mit einer Mehrzahl von Antennenelementen zur Erzeugung von Sendestrahlen gemäß einem Verfahren nach einem der Ansprüche 1 bis 3,
wobei innerhalb der Mehrzahl von Antennenelementen schaltungstechnisch mehrere Gruppen mit jeweils mehreren benachbarten Antennenelementen definiert werden können,
**dadurch gekennzeichnet,**
- **dass** mit Hilfe von Schaltungseinrichtungen jeweils eine separate Aktivierung einer Gruppe von Antennenelementen möglich ist,
- **dass** schaltungstechnisch einander benachbarte Gruppen von Antennenelementen derart definiert werden, dass sie zumindest ein gemeinsames Antennenelement aufweisen und
- **dass** schaltungstechnisch Gruppen mit unterschiedlicher Anzahl von Antennenelementen definiert werden.

5. SAR-Antennensystem nach Anspruch 4,
**dadurch gekennzeichnet,**
**dass** das SAR-Antennensystem einen Reflektor aufweist und die Antennenelemente in einer Reihe in der Fokalebene des Reflektors angeordnet sind.

6. SAR-Antennensystem nach Anspruch 4 oder 5,
**dadurch gekennzeichnet,**
**dass** ein gemeinsames Hochfrequenznetzwerk für Sendesignale und Empfangssignale vorgesehen ist.

7. SAR-Antennensystem nach einem der Ansprüche 4 bis 6,
**dadurch gekennzeichnet,**
**dass** getrennte Hochfrequenznetzwerke für Sendesignale und Empfangssignale vorgesehen sind.

## Claims

1. Method for generating transmit beams with an SAR antenna system that has a multiplicity of antenna elements, wherein within the multiplicity of antenna elements a plurality of groups with in each case a plurality of adjacent antenna elements are defined,
**characterised in that**
- a plurality of defined transmit beams are generated in each case by activation of one group of antenna elements associated with a transmit beam,
- a surface region is scanned by adjacent transmit beams by activating a plurality of adjacent groups of antenna elements one after the other,
- adjacent groups of antenna elements are defined in such a way that they have at least one common antenna element, and adjacent overlapping transmit beams are generated by adjacent groups of antenna elements defined in such a way, and
- groups with different numbers of antenna elements are defined, and transmit beams with different spreads are generated by activation of the groups with different numbers of antenna elements.

2. Method according to claim 1,
**characterised in that**
a surface region is scanned by at least one transmit beam by aligning the transmit-beam direction in the direction of the beginning of the surface region, and the group for generating the transmit beam remains activated for so long until the transmit beam has swept over the whole surface region.

3. Method according to claim 1,
**characterised in that** a surface point is illuminated by means of at least one transmit beam by aligning the transmit-beam direction in the direction of the surface point, and the transmit-beam direction is continuously readjusted with respect to the surface point during the period of activation of the group generating the transmit beam.

4. SAR antenna system having a multiplicity of antenna elements for generating transmit beams in accordance with a method according to one of claims 1 to 3, wherein within the multiplicity of antenna elements a plurality of groups with in each case a plurality of adjacent antenna elements can be defined in terms of circuit engineering,
**characterised in that**
- with the aid of switching devices in each case separate activation of a group of antenna elements is possible,
- adjacent groups of antenna elements are defined in terms of circuit engineering in such a way that they have at least one common antenna element, and
- groups with different numbers of antenna elements are defined in terms of circuit engineering.

5. SAR antenna system according to claim 4,
**characterised in that** the SAR antenna system has a reflector, and the antenna elements are arranged in a row in the focal plane of the reflector.

6. SAR antenna system according to claim 4 or 5,
**characterised in that** a common high-frequency network for transmit signals and receive signals is provided.

7. SAR antenna system according to one of claims 4 to 6,
**characterised in that** separate high-frequency networks for transmit signals and receive signals are provided.

## Revendications

1. Procédé pour générer des faisceaux d'émission avec un système d'antenne SAR qui présente une pluralité d'éléments d'antenne,
plusieurs groupes ayant chacun plusieurs éléments d'antenne voisins étant définis parmi la pluralité d'éléments d'antenne,
**caractérisé en ce**
- **que** plusieurs faisceaux d'émission définis sont générés à chaque fois par une activation d'un groupe d'éléments d'antenne associé à un faisceau d'émission,
- **qu'**une région de surface est balayée par les faisceaux d'émission voisins en activant les uns après les autres plusieurs groupes voisins d'éléments d'antenne,
- **que** des groupes, voisins les uns des autres, d'éléments d'antenne sont définis de manière telle qu'ils présentent au moins un élément d'antenne commun et que des faisceaux d'émission voisins, se recouvrant l'un l'autre, sont générés par des groupes voisins, définis de cette manière, d'éléments d'antenne et
- **que** des groupes avec un nombre différent d'éléments d'antenne sont définis et que des faisceaux d'émission avec une portée différente sont générés par l'activation des groupes avec un nombre différent d'éléments d'antenne.

2. Procédé selon la revendication 1,
**caractérisé en ce**
**qu'**une région de surface est balayée par au moins un faisceau d'émission par le fait que la direction des faisceaux d'émission est orientée au début de la région de surface et que le groupe chargé de générer le faisceau d'émissions reste activé tant que le faisceau d'émission a balayé toute la région de surface.

3. Procédé selon la revendication 1,
**caractérisé en ce**
**qu'**une illumination d'un point de surface a lieu au moins par un faisceau d'émission par le fait que la direction du faisceau d'émission est orientée en direction du point de surface et que la direction du faisceau d'émission durant la durée de l'activation du groupe, qui génère le faisceau d'émission, est réajustée en continu sur le point de surface.

4. Système d'antenne SAR équipée d'une pluralité d'éléments d'antenne pour générer des faisceaux d'émission conformément à un procédé selon l'une quelconque des revendications 1 à 3,
plusieurs groupes avec chacun plusieurs éléments d'antenne voisins pouvant être définis par une technique de commutation au sein de la pluralité d'éléments d'antenne,
**caractérisé en ce**
- **qu**'une activation séparée d'un groupe d'éléments d'antenne est possible à chaque fois à l'aide de dispositifs de commutation,
- que des groupes, voisins les uns des autres, d'éléments d'antenne sont définis par une technique de commutation de manière telle qu'ils présentent au moins un élément d'antenne commun et
- que des groupes avec un nombre différent d'éléments d'antenne sont définis par une technique de commutation.

5. Système d'antenne SAR selon la revendication 4,
**caractérisé en ce**
**que** le système d'antenne SAR présente un réflecteur et en ce que les éléments d'antenne sont disposés en ligne dans le plan focal du réflecteur.

6. Système d'antenne SAR selon la revendication 4 ou 5,
**caractérisé en ce**
**qu'**un réseau commun à hautes fréquences est prévu pour des signaux d'émission et des signaux de réception.

7. Système d'antenne SAR selon l'une quelconque des revendications 4 à 6,
**caractérisé en ce**
**que** des réseaux à hautes fréquences distincts sont prévus pour des signaux d'émission et des signaux de réception.
